# EUROPÄISCHE PATENTSCHRIFT

(11) **EP 0 450 456 B1**
(45) Veröffentlichungstag und Bekanntmachung des Hinweises auf die Patenterteilung: **19.07.1995**
(21) Anmeldenummer: 91104709.0
(22) Anmeldetag: 26.03.1991
(51) Int. Cl.: C08F 210/06, C08F 4/642

(54) **Copolymerisate des Propylens mit anderen Alk-1-enen**
Propylene copolymers with other alk-1-enes
Copolymères du propylène avec d'autres alcènes-1

(30) Priorität: 06.04.1990 DE 4011160
(43) Veröffentlichungstag der Anmeldung: 09.10.1991
(73) Patentinhaber: BASF Aktiengesellschaft, 67063 Ludwigshafen (DE)
(72) Erfinder: Kerth, Juergen, Dr., W-6719 Carlsberg (DE); Koelle, Peter, Dr., W-6700 Ludwigshafen (DE); Zolk, Ralf, Dr., W-6714 Weisenheim (DE); Schwager, Harald, Dr., W-6720 Speyer (DE)

(56) Entgegenhaltungen:
- EP-A- 0 120 503
- EP-A- 0 272 481
- DE-A- 3 151 972
- DE-A- 3 904 079
- US-A- 4 483 971

## Beschreibung

Die vorliegende Erfindung betrifft Copolymerisate des Propylens mit anderen Alk-1-enen, dadurch erhältlich, daß man in Abwesenheit eines flüssigen Reaktionsmediums aus der Gasphase heraus bei einem Druck von 15 bis 30 bar, einer Temperatur von 60 bis 90°C und einer mittleren Verweilzeit des Polymerisats von 1 bis 5 Stunden, mit Hilfe eines Ziegler-Natta-Katalysatorsystems, das neben einer titanhaltigen Feststoffkomponente eine Aluminiumkomponente und eine Elektronendonorkomponente enthält, ein Gemisch aus Propylen und anderen Alk-1-enen polymerisiert, wobei man die Temperatur bei vorgegebenem Druck jeweils so hoch wählt, daß keine Kondensation des Monomerengemisches im Gasraum eintritt und dabei das Verhältnis der Partialdrücke zwischen Propylen und den anderen Alk-1-enen auf 5 : 1 bis 100 : 1 einstellt.

Außerdem betrifft die Erfindung ein Verfahren zur Herstellung dieser Copolymerisate sowie Folien und Formkörper aus diesen Copolymerisaten.

Die Herstellung von Propylen-Copolymerisaten durch Ziegler-Natta-Polymerisation ist bereits mehrfach beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200).

Desweiteren sind Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit auf, sind aber verfahrenstechnisch relativ aufwendig, da die Polymerisation in zwei hintereinandergeschalteten Reaktoren durchgeführt wird, die regeltechnisch aufeinander abgestimmt werden müssen.

Aus der US-A 4 260 710 ist ferner ein Verfahren bekannt, bei der aus der Gasphase heraus Homo- und Copolymerisate von Alk-1-enen durch Polymerisation mit Hilfe von Ziegler-Natta-Katalysatoren in einem Rührkessel hergestellt werden. Mit Hilfe dieses dort beschriebenen Verfahrens lassen sich insbesondere Polypropylene mit einer hohen Stereospezifität herstellen, wobei aber die Produktivität des Katalysators, die das Verhältnis zwischen der Menge an erhaltenen Polymeren zur eingesetzten Katalysatormenge angibt, noch verbesserungsfähig ist.

In der EP-A 272 481 wird ebenfalls ein Verfahren zur Herstellung von Copolymerisaten des Propylens beschrieben, wobei ein ungeträgertes Ziegler-Natta-Katalysatorsystem eingesetzt wird. Die dabei erhaltenen Copolymerisate weisen u.a. eine gute Kälteschlagzähigkeit auf und eignen sich vorallam zur Herstellung von Folien.

Für einige Anwendungsgebiete ist es außerdem notwendig, den Anteil an unerwünschten Katalysatorresten, insbesondere an Chlor, im entstehenden Copolymerisat zu senken, damit man derartige Materialien auch für solche Zwecke verwenden kann, bei denen sie mit korrisionsgefährdeten Stoffen in Berührung kommen. Die Anwendung von Copolymerisaten des Propylens im Lebensmittelbereich macht es überdies erforderlich, den xylollöslichen Anteil im Polymerisat möglichst gering zu halten.

Der vorliegenden Erfindung lag daher die Aufgabe zugrunde, den geschilderten Nachteilen abzuhelfen und Copolymerisate des Propylens mit verbesserten anwendungstechnischen Eigenschaften zu entwickeln.

Demgemäß wurden die eingangs definierten neuen Propylen-Copolymerisate gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, die ein Festbett aus feinteiligem Polymerisat, vorzugsweise aus Polypropylen enthalten, welches üblicherweise durch geeignete Rührvorrichtungen in Bewegung gehalten wird.

Die Polymerisation wird in Abwesenheit eines flüssigen Reaktionsmediums in der Gasphase bei einem Druck von 15 bis 30 bar, einer Temperatur von 60 bis 90°C und einer mittleren Verweilzeit des Polymerisats von 1 bis 5 Stunden durchgeführt. Bevorzugt sind dabei Drücke von 20 bis 30 bar, Temperaturen von 65 bis 80°C und mittlere Verweilzeiten von 1,5 bis 4 Stunden. Durch geeignete Wahl der entsprechenden Reaktionsparameter sollte ferner darauf geachtet werden, daß im Polymerisationssystem pro mmol der Aluminiumkomponente des Ziegler-Natta-Katalysatorsystems 0,05 bis 2 kg, bevorzugt 0,1 bis 1,5 kg, Polypropylen gebildet werden.

Das Verfahren kann mit den in der Polymerisationstechnik üblichen Ziegler-Natta-Katalysatoren durchgeführt werden. Diese enthalten u.a. neben einer titanhaltigen Feststoffkomponente noch eine Aluminium- und eine Elektronendonorkomponente.

Zur Herstellung der titanhaltigen Feststoffkomponente werden im allgemeinen Halogenide oder Alkoholate des drei- oder vierwertigen Titans verwendet, wobei die Chloride des Titans, insbesondere Titantetrachlorid, bevorzugt sind. Üblicherweise wird die titanhaltige Feststoffkomponente auf einem möglichst feinteiligen Träger aufgebracht, wobei sich Siliciumoxide, Aluminiumoxide, sowie Aluminiumsilicate der Bruttoformel SiO₂·aAl₂O₃, wobei a für einen Wert von 0,01 bis 2, insbesondere von 0,01 bis 0,5 steht, gut bewährt haben.

Die bevorzugt verwendeten Träger weisen einen Teilchendurchmesser von 0,1 bis 1000 »m, insbesondere von 10 bis 300 »m, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weitere Bestandteile der titanhaltigen Feststoffkomponente sind u.a. Verbindungen des Magnesiums. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-(C₁-C₁₀-alkyl)-Verbindungen verwendet werden. Daneben enthält die titanhaltige Feststoffkomponente ein Halogen, bevorzugt Chlor oder Brom.

Neben den drei- oder vierwertigen Titanverbindungen, dem Träger, der Magnesiumverbindung und dem Halogen enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 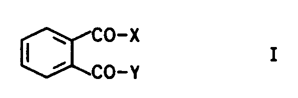
verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt folgendes dreistufige Verfahren angewandt.

In der ersten Stufe versetzt man zunächst einen feinteiligen Träger, bevorzugt Siliciumoxid oder SiO₂·aAl₂O₃ - wobei a für eine Zahl im Bereich von 0,01 und 2, insbesondere im Bereich von 0,01 und 0,5 steht -, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, ein. Danach fügt man ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Die Lösung wird mindestens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel mindestens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Als Aluminiumkomponente kommen neben Trialkylaluminium auch solche Verbindungen in Betracht, bei denen ein Alkylsubstituent durch eine Alkoxygruppe oder durch ein Halogen, wie Chlor oder Brom, ersetzt ist. Bevorzugt werden Trialkylaluminiumverbindungen verwendet, deren Substituenten jeweils 1 bis 8 C-Atome aufweisen, beispielsweise Trimethyl-, Triethyl- oder Methyldiethylaluminium.

Neben der titanhaltigen Feststoffkomponente und der Aluminiumkomponente enthalten die erfindungsgemäßen Katalysatorsysteme als weitere eigenständige Katalysatorkomponente noch Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonoren sind siliciumorganische Verbindungen der allgemeinen Formel II

R¹ₙSi(OR²)₄₋ₙ II,

wobei
R¹ eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bezeichnet, R² eine C₁- bis C₂₀-Alkylgruppe bedeutet und n für 1 bis 3 steht. Besonders bevorzugt werden dabei solche Verbindungen, in denen R¹ eine C₁- bis C₈-Alkylgruppe oder eine 5- bis 7-gliedrige Cycloalkylgruppe, R² eine C₁- bis C₄-Alkylgruppe und n 1 oder 2 bedeuten.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumkomponente und Titan aus der titanhaltigen Feststoffkomponente 10:1 bis 800:1, insbesondere 20:1 bis 200:1, und das Molverhältnis zwischen der Aluminiumkomponente und der Elektronendonorkomponente 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Mit diesem Ziegler-Natta-Katalysatorsystem polymerisiert man nach dem zu den erfindungsgemäßen Copolymerisaten führenden Verfahren ein Gemisch aus Propylen und anderen Alk-1-enen. Darunter werden C₂-C₁₀-Alk-1-ene, insbesondere Ethylen, But-1-en, Pent-1-en, Hex-1-en, Hept-1-en und Oct-1-en verstanden, wobei Ethylen und But-1-en bevorzugt werden. Zur Herstellung von speziellen Copolymerisaten kann auch ein Gemisch aus Ethylen und einem C₄-C₁₀-Alk-1-en verwendet werden, wobei in diesem Fall das Partialdruckverhältnis zwischen Ethylen und dem C₄-C₁₀-Alk-1-en auf 1 : 1 bis 100 : 1, insbesondere auf 2 : 1 bis 80 : 1 einzustellen ist.

Erfindungsgemäß ist bei dem vorgegebenen Druck von 15 bis 30 bar die Temperatur jeweils so hoch zu wählen, daß keine Kondensation des Monomerengemisches im Gasraum eintritt. Die Temperatur hängt dabei nicht nur vom jeweils vorherrschenden Druck ab, sondern auch von den Taupunkten der verwendeten Alk-1-ene und ist daher durch einige Vorversuche für jedes Polymerisationssystem zu ermitteln. Außerdem ist dafür Sorge zu tragen, daß das Verhältnis der Partialdrücke zwischen Propylen und den anderen Alk-1-enen im Bereich von 5 : 1 bis 100 : 1, insbesondere im Bereich von 5 : 1 bis 50 : 1 liegt. Da diese Maßgabe u.a. von der Art der Alk-1-ene abhängt, sind die entsprechenden Reaktionsparameter innerhalb der vorgegebenen Grenzen wiederum durch entsprechende Vorversuche zu ermitteln.

Das Molekulargewicht der dabei erhältlichen Polymerisate kann wie üblich durch Zugabe von Reglern, insbesondere von Wasserstoff kontrolliert werden. Weiterhin ist es möglich, Inertgase wie Stickstoff oder Argon mitzuverwenden.

Die nach dem erfindungsgemäßen verfahren erhältlichen Copolymerisate weisen eine statistische Monomerverteilung mit mittleren Molmassen von 10 000 bis 500 000 und Schmelzflußindices von 0,1 bis 100 g/10 min, vorzugsweise von 0,2 bis 10 g/10 min auf, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Das Verfahren ermöglicht die Herstellung von Copolymerisaten des Propylens mit einer hohen Produktivität. Die dabei erhältlichen Copolymerisate enthalten nur geringe Mengen xylollöslicher Stoffe und Chlor.

Aufgrund dieser Eigenschaften eignen sich solche Copolymerisate u.a. zur Herstellung von Folien für den Lebensmittelbereich, ferner von Rohren, Belägen, Fasern, Hohlkörpern, Spritzgußartikeln und von Formteilen für den Fahrzeugbau.

### Beispiele

Alle Beispiele wurden in einem vertikal gerührten Gasphasenreaktor mit einem Nutzvolumen von 800 l in Anwesenheit von Wasserstoff als Molekulargewichtsregler durchgeführt. Der Reaktor enthielt ein bewegtes Festbett aus feinteiligem Polymerisat. Der Reaktorausstoß an Polymerisat betrug in allen Beispielen 85 kg Polypropylen pro Stunde.

### Beispiel 1

In den Gasphasenreaktor wurde bei einem Druck von 23 bar und einer Temperatur von 70°C ein gasförmiges Gemisch aus Propylen und Ethylen eingeleitet, wobei das Verhältnis zwischen dem Partialdruck des Propylens und dem des Ethylens 25 : 1 betrug. Dieses Gemisch wurde bei einer mittleren Verweilzeit von 2,5 Stunden mit Hilfe eines Ziegler-Natta-Katalysators kontinuierlich polymerisiert, wobei pro Stunde 2,2 g einer titanhaltigen Feststoffkomponente, 255 mmol Triethylaluminium und 25 mmol Dimethoxyisobutylisopropylsilan als Katalysatorbestandteile verwendet wurden. Dabei wurden pro mmol der Aluminiumkomponente 0,3 kg Propylen-Copolymerisat erzeugt.

Nach Beendigung der Gasphasenpolymerisation erhielt man ein Propylen-Ethylen-Copolymerisat mit einem Schmelzflußindex von 2,5 g/10 min., bei 230°C und 2,16 kg (nach DIN 53 735). Der Gehalt an einpolymerisiertem Ethylen betrug 4,2 Gew.-%. Die Produktivität des Katalysators und die Gehalte an Chlor und an xylollöslichen Anteilen im erfindungsgemäßen Propylen-Ethylen-Copolymerisat können der nachstehenden Tabelle entnommen werden.

Die titanhaltige Feststoffkomponente wurde nach folgendem Verfahren hergestellt:
Dazu versetzte man in einer ersten Stufe SiO₂, welches einen Teilchendurchmesser von 20 bis 45 »m, ein Porenvolumen von 1,75 cm³/g und eine Oberfläche von 320 m²/g aufwies, mit in n-Heptan gelöstem Butyl-octylmagnesium, wobei pro Mol SiO₂ 0,25 Mol der Magnesiumverbindung eingesetzt wurden. Die Reaktionsmischung wurde 1,5 Stunden lang bei 90°C gerührt, danach auf 20°C abgekühlt und anschließend wurde die 10-fache molare Menge, bezogen auf die magnesiumorganische Verbindung, an Chlorwasserstoff eingeleitet.

Danach fügte man unter ständigem Rühren 3 Molteile Ethanol, bezogen auf 1 Molteil Magnesium hinzu. Diese Lösung wurde 1,5 Stunden lang bei 80°C gerührt und anschließend mit 6 Molteilen Titantetrachlorid und 0,5 Molteilen Phthalsäuredi-n-butylester, jeweils bezogen auf 1 Molteil Magnesium, versetzt. Die Lösung wurde weitere zwei Stunden gerührt, und danach wurde der Feststoff vom Lösungsmittel durch Absaugen getrennt.

Das daraus erhältliche Produkt extrahierte man zwei Stunden lang bei 125°C mit einer 15 gewichtsprozentigen Lösung von Titantetrachlorid in Ethylbenzol. Anschließend wurde der Feststoff durch Filtration vom Extraktionsmittel getrennt und solange mit n-Heptan gewaschen, bis dieses nur noch 0,3 Gew.-% Titantetrachlorid enthielt.

Die daraus resultierende titanhaltige Feststoffkomponente enthielt 3,1 Gew.-% Titan, 6,3 Gew.-% Magnesium und 24,8 Gew.-% Chlor.

### Beispiel 2

Mit dem gleichen Katalysatorsystem und unter den Bedingungen von Beispiel 1, jedoch bei 80°C, wurde ein Propylen-Ethylen-Copolymerisat hergestellt, das einen Schmelzflußindex von 2,5 g/10 min., bei 230°C und 2,16 kg (nach DIN 53 735) aufwies. Der Gehalt an einpolymerisiertem Ethylen betrug 4,1 Gew.-%. Die Produktivität des Katalysators und die Gehalte an Chlor und an xylollöslichen Anteilen im erfindungsgemäßen Propylen-Ethylen-Copolymerisat können der nachstehenden Tabelle entnommen werden.

### Beispiel 3

Mit dem gleichen Katalysatorsystem und unter den Reaktionsbedingungen wie in Beispiel 1 beschrieben, wurde ein gasförmiges Gemisch aus Propylen und But-1-en polymerisiert, wobei das Verhältnis zwischen dem Partialdruck des Propylens und dem des But-1-ens 25 : 1 betrug.

Nach Beendigung der Gasphasenpolymerisation erhielt man ein Propylen-But-1-en-Copolymerisat mit einem Schmelzflußindex von 11 g/10 min., bei 230°C und 2,16 kg (nach DIN 53 735). Der Gehalt an einpolymerisiertem But-1-en betrug 5,1 Gew.-%. Die Produktivität des Katalysators und die Gehalte an Chlor und an xylollöslichen Anteilen im erfindungsgemäßen Propylen-But-1-en-Copolymerisat können der nachstehenden Tabelle entnommen werden.

### Beispiel 4

Mit dem gleichen Katalysatorsystem und unter den Bedingungen von Beispiel 3, jedoch bei 80°C, wurde ein Propylen-But-1-en-Copolymerisat hergestellt, das einen Schmelzflußindex von 10 g/10 min., bei 230°C und 2,16 kg (nach DIN 53 735) aufwies. Der Gehalt an einpolymerisiertem But-1-en betrug 4,9 Gew.-%. Die Produktivität des Katalysators und die Gehalte an Chlor und an xylollöslichen Anteilen im erfindungsgemäßen Propylen-But-1-en-Copolymerisat können der nachstehenden Tabelle entnommen werden.

### Beispiel 5

Mit dem gleichen Katalysatorsystem und unter identischen Reaktionsbedingungen wie in Beispiel 1 beschrieben, wurde ein gasförmiges Gemisch aus Propylen, Ethylen und But-1-en polymerisiert. Das Verhältnis der Partialdrücke zwischen Propylen, Ethylen und But-1-en betrug dabei 25 : 1 : 0,65, die mittlere Verweilzeit des Polymerisats lag bei 2,7 Stunden.

Nach Beendigung der Gasphasenpolymerisation erhielt man ein Terpolymerisat, das neben Propylen noch 4,0 Gew.-% Ethylen und 2,6 Gew.-% But-1-en aufwies. Der Schmelzflußindex betrug 0,3 g/10 min., bei 230°C und 2,16 kg (nach DIN 53 735). Der Schmelzpunkt des entstandenen Terpolymerisats lag bei 132°C. Die Produktivität des eingesetzten Katalysators und die Gehalte an Chlor und an xylollöslichen Anteilen im erfindungsgemäßen Terpolymerisat können der nachstehenden Tabelle entnommen werden.

### Beispiel 6

Mit dem gleichen Katalysatorsystem und unter den Bedingungen von Beispiel 5 wurde ein gasförmiges Gemisch aus Propylen, Ethylen und But-1-en polymerisiert.

Nach Beendigung der Gasphasenpolymerisation erhielt man ein Terpolymerisat, das neben Propylen noch 3,9 Gew.-% Ethylen und 2,7 Gew.-% But-1-en aufwies. Der Schmelzflußindex betrug 0,5 g/10 min., bei 230°C und 2,16 kg (nach DIN 53 735). Der Schmelzpunkt des entstandenen Terpolymerisats lag bei 128°C. Die Produktivität des eingesetzten Katalysators und die Gehalte an Chlor und an xylollöslichen Anteilen im erfindungsgemäßen Terpolymerisat können der nachstehenden Tabelle entnommen werden.

**Tabelle**

| Bsp | Produktivität (g Polypropylen/g titanhaltige Feststoffkomponente) | Schüttdichte* (g/l) | Chlorgehalt im Produkt (ppm) | xylollösliche Anteile im Produkt (Gew.-%) |
|---|---|---|---|---|
| 1 | 38.500 | 350 | 6 | 6,7 |
| 2 | 34.000 | 360 | 7 | 5,3 |
| 3 | 19.000 | 440 | 13 | 2,0 |
| 4 | 15.000 | 420 | 16 | 2,3 |
| 5 | 26.100 | 360 | 9 | 9,8 |
| 6 | 23.200 | 336 | 10 | 8,9 |

| | | | | |
|---|---|---|---|---|
| * nach DIN 53 466 | | | | |

## Patentansprüche (Patentansprüche für folgende(n) Vertragsstaat(en): AT, BE, DE, FR, GB, IT, NL)

1. Copolymerisate des Propylens mit anderen Alk-1-enen, dadurch erhältlich, daß man in Abwesenheit eines flüssigen Reaktionsmediums aus der Gasphase heraus bei einem Druck von 15 bis 30 bar, einer Temperatur von 60 bis 90°C und einer mittleren Verweilzeit des Polymerisats von bis 5 Stunden, mit Hilfe eines Ziegler-Natta-Katalysatorsystems, das neben einer titanhaltigen Feststoffkomponente aufgebracht auf einem feinteiligen Träger aus Siliciumoxid, Aluminiumoxid oder einem Aluminiumsilikat der Bruttoformel SiO₂.aAI₂O₃, wobei a für einen Wert von 0,01 bis 2 steht, eine Aluminiumkomponente und eine Elektronendonorkomponente enthält, ein Gemisch aus Propylen und anderen Alk-1-enen polymerisiert, wobei man die Temperatur bei vorgegebenem Druck jeweils so hoch wählt, daß keine Kondensation des Monomergemisches im Gasraum eintritt und dabei das Verhältnis der Partialdrücke zwischen Propylen und den anderen Alk-1-enen auf 5 : 1 bis 100 : 1 einstellt.

2. Copolymerisate nach Anspruch 1, dadurch erhältlich, daß man bei dem angegebenen Verfahren das Verhältnis der Partialdrücke zwischen Propylen und den anderen Alk-1-enen auf 5 : 1 bis 50 : 1 einstellt.

3. Copolymerisate nach Anspruch 1 oder 2, dadurch erhältlich, daß man bei dem angegebenen Verfahren als Alk-1-en Ethylen verwendet.

4. Copolymerisate nach Anspruch 1 oder 2, dadurch erhältlich, daß man bei dem angegebenen Verfahren als Alk-1-en But-1-en verwendet.

5. Copolymerisate nach Anspruch 1 oder 2, dadurch erhältlich, daß man bei dem angegebenen Verfahren als Alk-1-en ein Gemisch aus Ethylen und einem C₄-C₁₀-Alk-1-en verwendet, und dabei das Partialdruckverhältnis zwischen Ethylen und dem C₄-C₁₀-Alk-1-en auf 1 : 1 bis 100 : 1 einstellt.

6. Verfahren zur Herstellung von Copolymerisaten des Propylens mit anderen Alk-1-enen in einem bewegten Festbett, wobei man in Abwesenheit eines flüssigen Reaktionsmediums aus der Gasphase heraus bei einem Druck von 15 bis 30 bar, einer Temperatur von 60 bis 90°C und einer mittleren Verweilzeit des Polymerisats von 1 bis 5 Stunden mit Hilfe eines Ziegler-Natta-Katalysatorsystems, das neben einer titanhaltigen Feststoffkomponente aufgebracht auf einem feinteiligen Träger aus Siliciumoxid, Aluminiumoxid oder einem Aluminiumsilikat der Bruttoformel SiO₂.aAI₂O₃, wobei a für einen Wert von 0,01 bis 2 steht, eine Aluminiumkomponente und eine Elektronendonorkomponente enthält, ein Gemisch aus Propylen und anderen Alk-1-enen polymerisiert, dadurch gekennzeichnet, daß man die Temperatur bei vorgegebenem Druck jeweils so hoch wählt, daß keine Kondensation des Monomerengemisches im Gasraum eintritt und dabei das Verhältnis der Partialdrücke zwischen Propylen und den anderen Alk-1-enen auf 5 : 1 bis 100 : 1 einstellt.

7. Folien und Formkörper aus den Copolymerisaten gemäß den Ansprüchen 1 bis 5.

## Patentansprüche (Patentansprüche für folgende(n) Vertragsstaat(en): ES)

1. Verfahren zur Herstellung von Copolymerisaten des Propylens mit anderen Alk-1-enen in einem bewegten Festbett, wobei man in Abwesenheit eines flüssigen Reaktionsmediums aus der Gasphase heraus bei einem Druck von 15 bis 30 bar, einer Temperatur von 60 bis 90°C und einer mittleren Verweilzeit des Polymerisats von 1 bis 5 Stunden mit Hilfe eines Ziegler-Natta-Katalysatorsystems, das neben einer titanhaltigen Feststoffkomponente aufgebracht auf einem feinteiligen Träger aus Siliciumoxid, Aluminiumoxid oder einem Aluminiumsilikat der Bruttoformel SiO₂.aAI₂O₃, wobei a für einen Wert von 0,01 bis 2 steht, eine Aluminiumkomponente und eine Elektronendonorkomponente enthält, ein Gemisch aus Propylen und anderen Alk-1-enen polymerisiert, dadurch gekennzeichnet, daß man die Temperatur bei vorgegebenem Druck jeweils so hoch wählt, daß keine Kondensation des Monomerengemisches im Gasraum eintritt und dabei das Verhältnis der Partialdrücke zwischen Propylen und den anderen Alk-1-enen auf 5 : 1 bis 100 : 1 einstellt.

2. Verfahren nach Anspruch 1, dadurch gekennzeichnet, daß man das Verhältnis der Partialdrücke zwischen Propylen und den anderen Alk-1-enen auf 5 : 1 bis 50 : 1 einstellt.

3. Verfahren nach Anspruch 1 oder 2, dadurch gekennzeichnet, daß man als Alk-1-en Ethylen verwendet.

4. Verfahren nach Anspruch 1 oder 2, dadurch gekennzeichnet, daß man als Alk-1-en But-1-en verwendet.

5. Verfahren nach Anspruch 1 oder 2, dadurch gekennzeichnet, daß man als Alk-1-en ein Gemisch aus Ethylen und einem C₄-C₁₀-Alk-1-en verwendet, und dabei das Partialdruckverhältnis zwischen Ethylen und dem C₄-C₁₀-Alk-1-en auf 1 : 1 bis 100 : 1 einstellt.

6. Verfahren zur Herstellung von Folien und Formkörpern, dadurch gekennzeichnet, daß man die nach den Verfahren der Ansprüche 1 bis 5 erhaltenen Copolymerisate verwendet.

## Claims (Claims for the following Contracting State(s): AT, BE, DE, FR, GB, IT, NL)

1. A copolymer of propylene with other 1-alkenes, obtainable by gas-phase polymerization of a mixture of propylene and other 1-alkenes in the absence of a liquid reaction medium under a pressure of from 15 to 30 bar, at from 60 to 90°C and with an average holdup time of the polymer of from 1 to 5 hours, with the aid of a Ziegler-Natta catalyst system which, besides a titanium-containing solid component applied to a finely divided carrier of silica, alumina or an aluminum silicate of the formula SiO₂.aAl₂O₃ where a is from 0.01 to 2, contains an aluminum component and an electron donor, with the temperature being chosen so that, under the preset pressure, no condensation of the monomer mixture takes place in the gas space and, moreover, the ratio of the partial pressures of propylene and the other 1-alkenes is adjusted to from 5 : 1 to 100 : 1.

2. A copolymer as claimed in claim 1, obtainable by adjusting the ratio of the partial pressures of propylene and the other 1-alkenes in the stated process to from 5 : 1 to 50 : 1.

3. A copolymer as claimed in claim 1 or 2, obtainable by using ethylene as 1-alkene in the stated process.

4. A copolymer as claimed in claim 1 or 2, obtainable by using 1-butene as 1-alkene in the stated process.

5. A copolymer as claimed in claim 1 or 2, obtainable by using a mixture of ethylene and a C₄-C₁₀-1-alkene as 1-alkene in the stated process and adjusting the partial pressure ratio between ethylene and the C₄-C₁₀-1-alkene therein to from 1 : 1 to 100 : 1.

6. A process for preparing copolymers of propylene with other 1-alkenes in an agitated fixed bed, entailing gas-phase polymerization of a mixture of propylene and other 1-alkenes in the absence of a liquid reaction medium under a pressure of from 15 to 30 bar, at from 60 to 90°C and with an average holdup time of the polymer of from 1 to 5 hours, with the aid of a Ziegler-Natta catalyst system which, besides a titanium-containing solid component applied to a finely divided carrier of silica, alumina or an aluminum silicate of the formula SiO₂.aAl₂O₃ where a is from 0.01 to 2, contains an aluminum component and an electron donor, which comprises the temperature being chosen so that, under the preset pressure, no condensation of the monomer mixture takes place in the gas space and, moreover, the ratio of the partial pressures of propylene and the other 1-alkenes is adjusted to from 5 : 1 to 100 : 1.

7. A sheet or shaped article composed of copolymers as claimed in any of claims 1 to 5.

## Claims (Claims for the following Contracting State(s): ES)

1. A process for preparing a copolymer of propylene with other 1-alkenes in an agitated fixed bed, entailing gas-phase polymerization of a mixture of propylene and other 1-alkenes in the absence of a liquid reaction medium under a pressure of from 15 to 30 bar, at from 60 to 90°C and with an average holdup time of the polymer of from 1 to 5 hours, with the aid of a Ziegler-Natta catalyst system which, besides a titanium-containing solid component applied to a finely divided carrier of silica, alumina or an aluminum silicate of the formula SiO₂.aAl₂O₃ where a is from 0.01 to 2, contains an aluminum component and an electron donor, which comprises the temperature being chosen so that, under the preset pressure, no condensation of the monomer mixture takes place in the gas space and, moreover, the ratio of the partial pressures of propylene and the other 1-alkenes is adjusted to from 5 : 1 to 100 : 1.

2. A process as claimed in claim 1, wherein the ratio of the partial pressures of propylene and the other 1-alkenes is adjusted to from 5 : 1 to 50 : 1.

3. A process as claimed in claim 1 or 2, wherein ethylene is used as 1-alkene.

4. A process as claimed in claim 1 or 2, wherein 1-butene is used as 1-alkene.

5. A process as claimed in claim 1 or 2, wherein a mixture of ethylene and a C₄-C₁₀-1-alkene is used as 1-alkene, and the partial pressure ratio between ethylene and the C₄-C₁₀-1-alkene therein is adjusted to from 1 : 1 to 100 : 1.

6. A process for producing sheets and shaped articles, which comprises using copolymers obtained by the process of any of claims 1 to 5.

## Revendications (Revendications pour l'(les) Etat(s) contractant(s) suivant(s): AT, BE, DE, FR, GB, IT, NL)

1. Copolymères du propylène et d'autres alcènes-1, pouvant être obtenus en polymérisant un mélange de propylène et d'autres alcènes-1 en l'absence d'un milieu réactionnel liquide, en phase gazeuse, sous une pression de 15 à 30 bar, à une température de 60 à 90°C et avec une durée moyenne de séjour du polymère de 1 à 5 h, à l'aide d'un système catalytique de Ziegler-Natta qui contient, en dehors d'un composant solide contenant du titane fixé sur un support finement divisé en oxyde de silicium, en oxyde d'aluminium ou en un silicate d'aluminium de formule brute SiO₂.aAl₂O₃, a ayant une valeur de 0,01 à 2, un composant à base d'aluminium et un composant donneur d'électrons, la température étant choisie chaque fois, pour une pression prédéterminée, à un niveau suffisamment élevé pour qu'il ne se produise pas de condensation du mélange de monomères dans l'atmosphère de l'appareil, et le rapport des pressions partielles entre le propylène et les autres alcènes-1 étant réglé à une valeur comprise entre 5:1 et 100:1.

2. Copolymères selon la revendication 1, pouvant être obtenus en réglant, dans le procédé indiqué, le rapport des pressions partielles entre le propylène et les autres alcènes-1 à une valeur comprise entre 5:1 et 50:1.

3. Copolymères selon la revendication 1 ou 2, pouvant être obtenus en utilisant de l'éthylène comme alcène-1 dans le procédé indiqué.

4. Copolymères selon la revendication 1 ou 2, pouvant être obtenus en utilisant du butène-1 comme alcène-1 dans le procédé indiqué.

5. Copolymères selon la revendication 1 ou 2, pouvant être obtenus en utilisant, comme alcène-1 dans le procédé indiqué, un mélange d'éthylène et d'un alcène-1 en C₄-C₁₀, le rapport des pressions partielles entre l'éthylène et l'alcène-1 en C₄-C₁₀ étant réglé à une valeur comprise entre 1:1 et 100:1.

6. Procédé de préparation de copolymères du propylène et d'autres alcènes-1 dans un lit fixe mis en mouvement, dans lequel on polymérise un mélange de propylène et d'autres alcènes-1 en l'absence d'un milieu réactionnel liquide, en phase gazeuse, sous une pression de 15 à 30 bar, à une température de 60 à 90°C et avec une durée moyenne de séjour du polymère de 1 à 5 h, à l'aide d'un système catalytique de Ziegler-Natta qui contient, en dehors d'un composant solide contenant du titane fixe sur un support finement divisé, en oxyde de silicium, en oxyde d'aluminium ou en un silicate d'aluminium de formule brute SiO₂.aAl₂O₃, a ayant une valeur de 0,01 à 2, un composant a base d'aluminium et un composant donneur d'électrons, caractérisé en ce que l'on choisit chaque fois la température, pour une pression prédéterminée, à un niveau suffisamment éleve pour qu'il ne se produise pas de condensation du mélange de monomeres dans l'atmosphère de l'appareil, le rapport des pressions partielles entre le propylène et les autres alcènes-1 étant réglé à une valeur comprise entre 5:1 et 100:1.

7. Feuilles minces et corps moulés se composant des copolymères selon l'une quelconque des revendications 1 à 5.

## Revendications (Revendications pour l'(les) Etat(s) contractant(s) suivant(s): ES)

1. Procédé de préparation de copolymères du propylène et d'autres alcènes-1 dans un lit fixe mis en mouvement, dans lequel on polymérise un mélange de propylène et d'autres alcènes-1 en l'absence d'un milieu réactionnel liquide, en phase gazeuse, sous une pression de 15 à 30 bar, à une température de 60 à 90°C et avec une durée moyenne de séjour du polymère de 1 à 5 h, à l'aide d'un système catalytique de Ziegler-Natta qui contient, en dehors d'un composant solide contenant du titane fixé sur un support finement divisé en oxyde de silicium, en oxyde d'aluminium ou en un silicate d'aluminium de formule brute SiO₂.aAl₂O₃, a ayant une valeur de 0,01 à 2, un composant à base d'aluminium et un composant donneur d'électrons, caractérisé en ce que l'on choisit chaque fois la température, pour une pression prédéterminée, à un niveau suffisamment élevé pour qu'il ne se produise pas de condensation du mélange de monomères dans l'atmosphère de l'appareil, le rapport des pressions partielles entre le propylène et les autres alcènes-1 étant réglé à une valeur comprise entre 5:1 et 100:1.

2. Procédé selon la revendication 1, caractérisé en ce que l'on règle le rapport des pressions partielles entre le propylène et les autres alcènes-1 à une valeur comprise entre 5:1 et 50:1.

3. Procédé selon la revendication 1 ou 2, caractérisé en ce que l'on utilise de l'éthylène comme alcène-1.

4. Procédé selon la revendication 1 ou 2, caractérisé en ce que l'on utilise du butène-1 comme alcène-1.

5. Procédé selon la revendication 1 ou 2, caractérisé en ce que l'on utilise, comme alcène-1, un mélange d'éthylène et d'un alcène-1 en C₄-C₁₀, le rapport des pressions partielles entre l'éthylène et l'alcène-1 en C₄-C₁₀ étant réglé à une valeur comprise entre 1:1 et 100:1.

6. Procédé de fabrication de feuilles minces et de corps moulés, caractérisé en ce que l'on utilise des copolymères obtenus par le procédé selon l'une quelconque des revendications 1 à 5.
